Europäisches Patentamt

European Patent Office

Office européen des brevets

(11) Numéro de publication: **0 409 717 A1**

## DEMANDE DE BREVET EUROPEEN

(21) Numéro de dépôt: 90402049.2

(22) Date de dépôt: 07.07.90

(51) Int. Cl.⁵: **C04B 35/58**, C04B 35/50

(30) Priorité: 21.07.89 FR 8909845

(43) Date de publication de la demande:
23.01.91 Bulletin 91/04

(84) Etats contractants désignés:
AT BE CH DE DK ES FR GB GR IT LI LU NL SE

(71) Demandeur: RHONE-POULENC CHIMIE
25, quai Paul Doumer
F-92408 Courbevoie Cédex(FR)

(72) Inventeur: Iltis, Alain
13, rue des Noyers
F-93300 Aubervilliers(FR)

(74) Mandataire: Dubruc, Philippe et al
RHONE-POULENC CHIMIE Service Brevets
Chimie 25, quai Paul-Doumer
F-92408 Courbevoie Cédex(FR)

(54) Procédé de frittage d'un borure de terre rare.

(57) L'invention concerne un procédé de frittage d'un borure de terre rare.

Ce procédé est caractérisé en ce que dans une première étape, on maintient ledit borure sous vide à une température d'au moins $1500°C$, puis dans une seconde étape on le maintient sous un gaz neutre à une température au moins égale à la température précédente.

L'invention s'applique particulièrement bien au borure de lanthane.

EP 0 409 717 A1

## PROCEDE DE FRITTAGE D'UN BORURE DE TERRE

La présente invention concerne un procédé de frittage d'un borure de terre rare, notamment d'un borure de lanthane.

Par terre rare, on entend ici les éléments de terres rares appelés lanthanides ayant des numéros atomiques de 57 à 71 inclus et l'yttrium.

Les borures de terres rares sont des produits connus comme ayant des propriétés électricues intéressantes. En particulier, l'hexaborure de lanthane possède d'excellentes propriétés d'émission thermoionique et est utilisé dans la fabrication de cathodes thermoémissives.

L'hexaborure d'europium est par ailleurs intéressant comme matériau absorbeur de neutrons.

Toutefois, le frittage des borures de terres rares et notamment de LaB$_6$ est difficile à réaliser, ce oui conduit à les fritter sous pression. Mais une telle méthode est coûteuse.

D'autres méthodes de frittage naturel, c'est-à-dire sans pression sont connues. C'est ainsi que l'on peut fritter le borure sous argon. Mais dans ce cas, il est nécessaire de partir d'un produit très fin et de travailler à des températures supérieures à 2200° C.

Il est aussi possible de fritter les borures de terres rares jusqu'à des densités très proches des densités théoriques par traitement sous hydrogène. Mais la mise en oeuvre de ce gaz à des températures très élevées pose à l'évidence un problème de sécurité sur le plan industriel.

On connait enfin des procédés de frittage de ces borures à des densités élevées, mais qui nécessitent l'introduction d'additifs dans les borures, par exemple du carbone ou du carbure de bore. La présence de tels additifs peut nuire aux propriétés des produits obtenus.

L'objet de l'invention est donc la mise au point d'un procédé de frittage simple, sûr, efficace et ne nécessitant pas l'emploi d'additifs.

Dans ce but, le procédé selon l'invention de frittage d'un borure de terre rare est caractérisé en ce que dans une première étape, on maintient ledit borure sous vide à une température d'au moins 1500° C, puis dans une seconde étape on le maintient sous un gaz neutre à une température au moins égale à la température précédente.

Le procédé de l'invention permet ainsi d'obtenir un borure présentant une densité d'au moins 93 % de la densité théorique.

D'autres caractéristiques et avantages de l'invention apparaîtront plus clairement à la lecture de la description et des exemples concrets qui vont suivre.

En ce qui concerne tout d'abord le borure de départ, celui-ci peut être préparé par tout moyen connu, notamment selon le procédé décrit dans la demande de brevet européen n° 318 362.

On notera que contrairement aux procédés de frittage de l'art antérieur, il n'est pas nécessaire de partir de borures finement broyés par exemple de poudres présentant une taille moyenne de particules comprise entre 1 et 5 μm. Au contraire, le procédé de l'invention s'applique aussi à des poudres plus grossières c'est-à-dire pouvant présenter une taille moyenne de particules de l'ordre de 20 μm ou supérieure et une densité à cru de l'ordre de 60 %. Même dans un tel cas, il est possible d'obtenir des densités d'au moins 93 % de la densité théorique par le procédé de l'invention.

Compte tenu de la dureté des borures de terres rares, il s'agit là d'un avantage intéressant puisqu'on peut se passer d'une étape de broyage ou se contenter d'un broyage grossier.

Bien entendu, on ne sortirait pas du cadre de l'invention en partant de produits broyés finement, auquel cas on obtiendrait des borures de densité encore plus élevée.

Préalablement au frittage, le produit à traiter est mis sous la forme voulue par pressage unidirectionnel ou isostatique avec addition éventuelle d'un liant. Le liant peut être éliminé par traitement thermique du produit formé, sous air, préalablement au procédé de frittage proprement dit.

Comme indiqué plus haut, la première étape du procédé se fait sous vide, de préférence sous vide dynamique. Pour cette étape, un vide primaire peut être suffisant, c'est-à-dire une pression comprise entre 1 et 10 mm de mercure.

Le traitement sous vide se fait à une température d'au moins 1500° C. Cette température est plus particulièrement d'au moins 1600° C et peut être comprise entre cette température et la température de vaporisation du borure de terre rare sous le vide considéré. Généralement cette température limite est située aux environs de 2000° C pour la valeur du vide indiquée plus haut.

Il est à noter que la montée en température de l'ambiante à 1500° C peut se faire sous vide, l'essentiel étant que le borure de terre rare se trouve à une température d'au moins 1500° C pendant un temps suffisant.

Ce temps est habituellement compris entre 1 et 10 heures.

La seconde étape du procédé consiste à maintenir le borure sous un gaz neutre à une température qui est au moins égale à celle à laquelle s'est déroulée l'étape précédente.

Par gaz neutre, on entend tout gaz qui n'est pas susceptible de réagir avec le borure de terre rare concerné dans les conditions du traitement.

Généralement on utilise l'argon ou les autres gaz rares.

La pression sous laquelle se déroule ce traitement est généralement d'au moins 100 mm de mercure, de préférence elle est voisine de la pression ambiante ou normale.

Selon une variante de l'invention, on peut aussi réaliser cette seconde étape sous gaz neutre hydrogèné, plus particulièrement sous argon hydrogèné. Habituellement, la proportion d'hydrogène est d'au plus 10 % en volume du mélange total hydrogène-gaz neutre, de préférence d'au plus 5 %. On a pu remarquer que cette variante peut permettre d'augmenter encore la densité du produit fritté obtenu en fin de traitement.

La température habituelle pour cette seconde étape est généralement d'au moins 2000°C, par exemple aux environs de 2100°C.

La durée du traitement est généralement comprise entre 1 et 2 heures.

Des exemples concrets vont maintenant être donnés.

## EXEMPLE 1

On prend 4,5 g de LaB$_6$ pur (CERAC 99,5 %) dont le diamètre moyen de la particule est de 25 pm et qu'on mélange à 40 mg d'une solution de liant à base d'alcool polyvynilique à 15 %. On presse une pastille de 25 mm de diamètre à 4 t/cm2. La densité en cru de la pastille est de 58 % de la densité théorique. On élimine le liant en traitant la pastille à 500°C sous air.

On place ensuite la pastille sur un support de graphite et on porte le tout à 2130°C avec une rampe de température de 200°C par heure. Le four est maintenu sous vide (<10 mb). Lorsqu'on obtient une température de 1800°C, on introduit l'argon

On effectue un palier de 2 h à 2130°C, sous argon à pression normale.

A l'issue du traitement, on effectue une mesure de densité hydrostatique dans le pétrole. La pastille est frittée à 93,2 de la densité théorique.

## EXEMPLE COMPARATIF 2

On prépare une pastille comme dans l'exemple 1. On la place ensuite sur un support de graphite et on porte le tout à 2130°C pendant 2 h avec une rampe de 200°C/h en restant pendant toute la durée du traitement sous vide dynamique (<10 mb).

La pastille n'est frittée qu'à 79,6 % de la densité théorique.

## EXEMPLE COMPARATIF 3

On prépare une pastille de la même manière que précédemment. On la porte à 2130°C pendant 2 heures sous argon pendant toute la durée du traitement.

La pastille n'est frittée qu'à 74,6 % de la densité théorique.

## EXEMPLE n° 4

On prépare une pastille comme dans l'exemple 1. On la place ensuite sur un support graphite. On porte le tout à 2130°C avec une rampe de température de 200°C par heure. Le four est maintenu sous vide. Lorsqu'on obtient une température de 1800°C, on introduit un mélange argon-hydrogène contenant 10 % en volume d'hydrogène dans l'argon.

On effectue un palier de 2 h à 2130°C sous argon hydrogéné à pression normale.

A l'issue du traitement, on effectue une mesure de densité hydrostatique dans le pétrole. La pastille est frittée à 97 % ± 2 % de la densité théorique.

## Revendications

1 - Procédé de frittage d'un borure de terre rare caractérisé en ce que dans une première étape, on maintient ledit borure sous vide à une température d'au moins 1500°C, puis dans une seconde étape on le maintient sous un gaz neutre à une température au moins égale à la température précédente.

2 - Procédé selon la revendication 1 caractérisé en ce qu'on maintient le borure précité sous vide à une température d'au moins 1600°C.

3 - Procédé selon la revendication 1 ou 2 caractérisé en ce qu'on maintient le borure précité sous vide pendant une durée comprise entre 1 et 10 heures.

4 - Procédé selon l'une des revendications précédentes caractérisé en ce qu'on maintient le borure précité sous un gaz neutre à une température d'au moins 2000°C.

5 - Procédé selon l'une des revendications précédentes, caractérisé en ce qu'on maintient le borure précité sous un gaz neutre pendant une durée comprise entre 1 et 2 heures.

6 - Procédé selon l'une des revendications précédentes, caractérisé en ce que le gaz neutre précité est l'argon ou le néon.

7 - Procédé selon l'une des revendications précédentes, caractérisé en ce que dans la seconde étape on maintient le borure sous un gaz ne hydrogèné, notamment sous argon hydrogèné.

8 - Procédé selon l'une des revendications précédentes, caractérisé en ce que le borure de terre rare précité est le borure de lanthane.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | CHEMICAL ABSTRACTS, vol. 81, no. 20, 18 novembre 1974, page 367, colonne 2, abrégé no. 125986e, Columbus, Ohio, US; A.A. KOSYACHKOV et al.: "Comparative properties of cast and sintered lanthanum hexaboride", & POROSH. MET. 1974, (3), 74-6<br>--- | 1-8 | C 04 B  35/58<br>C 04 B  35/50 |
| Y | EP-A-0 116 851  (ELEKTROSCHMELZWERK KEMPTEN GmbH)<br>* Revendications 1,7; page 9, paragraphe 3 *<br>--- | 1-8 | |
| Y | CHEMICAL ABSTRACTS, vol. 83, no. 12, 22 septembre 1975, abrégé no. 107155v, Columbus, Ohio, US; U. KAWABE et al.: "Electron-beam emission cathodes", & JP-A-50 030 460<br>--- | 7 | |
| A | EP-A-0 204 962  (ELEKTROSCHMELZWERK KEMPTEN GmbH)<br>* Revendication 2; page 6, paragraphe 2 - page 7, paragraphe 1 *<br>----- | 1-8 | **DOMAINES TECHNIQUES RECHERCHES (Int. Cl.5)**<br><br>C 04 B  35/00 |

Le présent rapport a été établi pour toutes les revendications

| Lieu de la recherche | Date d'achèvement de la recherche | Examinateur |
|---|---|---|
| LA HAYE | 29-08-1990 | HAUCK, H.N. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)